# EUROPEAN PATENT SPECIFICATION

(11) **EP 0 919 416 B1**
(45) Date of publication and mention of the grant of the patent: **21.05.2003**
(21) Application number: 98121712.8
(22) Date of filing: 13.11.1998
(51) Int. Cl.: B60K 17/04, B60K 7/00

(54) **Transmission apparatus with integrated braking device**
Getriebe mit integrierter Bremse
Transmission avec frein integré

(30) Priority: 25.11.1997 IT UD970217
(43) Date of publication of application: 02.06.1999
(73) Proprietor: PROMEC S.R.L., 33030 Coseano (UD) (IT)
(72) Inventor: Pozzo, Luigino, 33030 Coseano (UD) (IT)
(74) Representative: D'Agostini, Giovanni, Dr.

(56) References cited:
- FR-A- 1 520 303
- US-A- 3 536 230

## Description

The present invention has for object a transmission apparatus with integrated braking device, in accordance with the preamble of claim 1.

The present transmission system finds particular or exclusive application in the motion transmission to the drive wheels of vehicles being directly driven by an electric or hydraulic motor.

### Prior art.

In prior art it is known that in the motion transmission to the drive wheels of vehicles, particularly industrial ones, such as for instance tractors, lift trucks, operating machines, electric o r hydraulic independent motors are used, one for each drive wheel, in which each motor is connected to the wheel axle by a transmission system with an incorporated reduction gear and a brake.

In such a case the use of separate brakes, which are usually integrated in the wheels is avoided, instead the brake is integrated in the respective transmission reduction gear system.

In this case there is the advantage of a considerable reduction of costs and a simplification of the whole driving and braking system. Prior art drawbacks

The prior art drawbacks substantially are:
- difficulty to access a braking system, both for adjustment and maintenance, if it is incorporated within the transmission reduction gear; disassembling of the whole reduction gear transmission system is necessary for having access to the braking device, which, usually comprises oil lubricated disks which need maintenance and intervention, anyway.

Further such a braking system comprises an oil bath which has the drawback of needing the use of a type of oil which may be a compromise between the two uses i.e. functions gear lubrication and brake lubrication.

The disk wears deteriorate the reduction gear oil endangering the bearings and gears life.

Instead, it is known that it is possible to use separate types of oils with specifical characteristics for the two functions gear r lubrication and brake lubrication, better performances of the apparatus may thereby be obtained.

FR-A-1520303 disclosed a transmission apparatus of the above-mentioned type.

The purpose of the present invention is to avoid the above mentioned drawbacks by making the braking system independent of the transmission system, though without renouncing to the above mentioned advantages, thus keeping the braking device always integrated in said transmission in an improved manner.

### Essence of the invention

The problem is solved as claimed by a transmission apparatus of the above-mentioned type comprising the feature of the characterising portion of claim 1.

### Advantages of the new solution

Thus the advantage of having a more effective and reliable device of different structure is obtained.

### Description of two types of invention embodiment

These and other advantages will appear from the following description of a preferred solution, with the aid of the enclosed drawings, whose execution details are not to be considered as limitative but only as examples.
Figure 1 is an axial section schematic view of the transmission passing through the two axles according to the present invention with use of an active braking system.
Figure 2 is an axial section schematic view of the transmission passing through the two axles according to the present invention with use of a passive braking system.

According to the figures:
- with (M) the motor, which may be electrical or hydraulic o r another suitable one
   is indicated;
- with (T) the transmission object of the present invention;
- with (DF) the braking device arranged according to the present invention and always integrated with said transmission (T);
- with (R) the driven, rotated means such as for instance a drive wheel of a vehicle (not shown), as known in the art.

More in particular, the motor (M) has a cover (10) which is fixed on a side to its motor box (1), and on the other side, by means of screws (111), to a counter-box (11) of said transmission apparatus (T), which in its turn is fixed to the body (12) which contains the transmission reduction gear system.

The body (12) includes said "Z"-like transmission system on two axles lines (X-X; Y-Y) and which comprises on the side of the axial exit (Y-Y) fixing means (326) for a wheel (R) and on the other side said counter-box (11) which houses said braking device (DF) is clamped to the body (12), which counter-box (11) is in its turn closed by an axial cover (131) and sealingly locked by screws (14).

Thus an easy access to the braking device (DF) is allowed and an oil different from the one contained in the box (12) of the transmission system (T) may be conveyed to the same, these two chambers being hermetically separated.

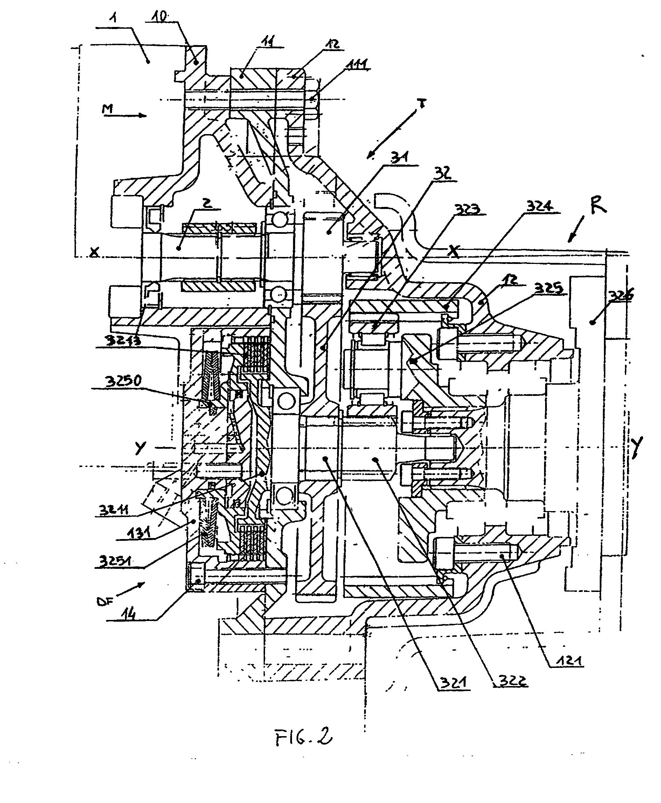

Further the thus conceived braking system (DF), which is provided in a separate chamber, may be applied to the same transmission (T) with active and passive function according to the specific applications, for instance the passive system (Fig. 2), which:
- is always braked in case of oil pressure lack on the circuit, the oil pressure on the respective flange (3250) being opposed by said braking spring means (3251)

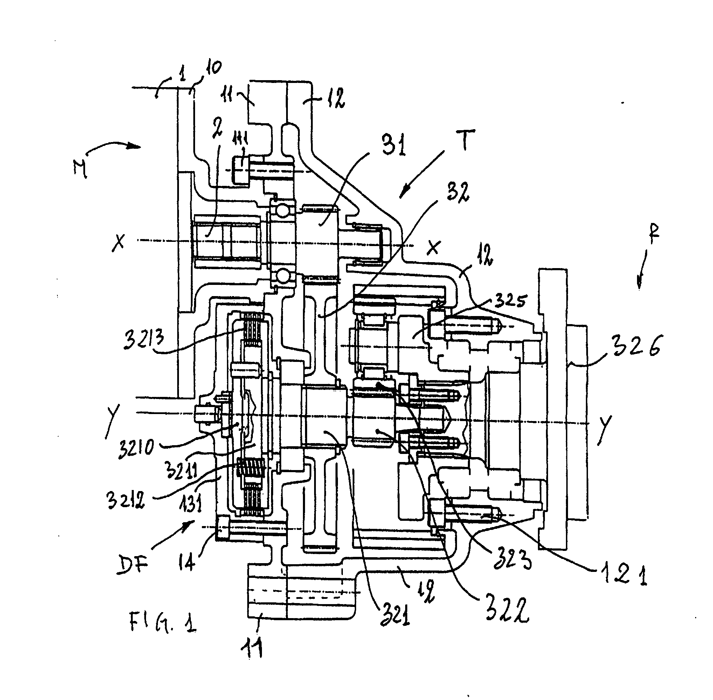

The active system (Fig. 1):
- is always free in case of oil pressure lack or mechanical functioning, the action operating by means of respective springs;
- is always braked in presence of oil pressure on circuit, the flange (3210) being in contact with and being actuated by the springs (3212).

Said braking means (DF) are coaxial (Y-Y) with the exit and the fixing means (326) of the driven axle for said wheel (R).

The motion transmission is obtained by keying to the motor shaft (2) a pinion (31) which operates a toothed wheel (32) fixed to the driven shaft (321) of said wheel axle line (Y-Y), which:
- on one side is fixed to said braking device (DF) for being braked, and
- on the other side, by means of a pinion (322), transmits the motion to a satellite wheel (323), which engages with a crown (324), which makes a satellite-holder (325) rotate in reduction, which is always on the same axle line (Y-Y) fixed to an external flange (326) for the fixing of said driven wheel (R).

The execution details may be changed within the scope of the appended claims.

## Claims

1. Transmission apparatus (T) with integrated braking device (DF), particularly of the type involving a reduction gear transmission system (T), which:
- on one side is mounted on a driving axle (2) of a drive motor (M) and
- on the other side a respective driven means such as for instance a wheel or another device to be rotated (R) is mounted, wherein said transmission apparatus (T) is arranged according to a "Z"-like direct transmission line by means of:
- a driving pinion (31) keyed to the driving axle (2) of said motor (M) on the live driving axle line (X-X),
- which engages a bigger wheel (32) which drives the motion to a driven shaft (321) on an adjacent parallel axle line (y-y) which:
- on one side is axially connected, by an epicyclic reduction gear (323-324-325) to a fixing means (326) for said device to be rotated (R), and wherein
- on the other side an independent and watertight coaxial braking device (DF) is housed in a separate chamber mounted to the transmission apparatus (T), the chamber comprising an opening and an external axial access cover (131),
**characterised in that** said braking device (DF) is mounted on said adjecent parallel axle line (y-y).

2. An apparatus, according to claim 1, **characterised in that** said braking device (DF) is actioned by braking spring means (3212) against a disk pack (3213) supported by a central body (3211), being always free in lack of oil pressure or mechanical actioning being provided with spring means (3212) opposing a flange which clamps the braking pack (3210) freeing the respective brake disks (3213).

3. An apparatus, according to claim 1, **characterised in that** said braking device (DF) comprises braking spring means (3251) acting against a disk pack (3213) supported by a central body (3211), and which is:
- always braked in lack of oil pressure by operation of said braking spring means (3251);
- is always free in presence of oil pressure on the circuit, wherein the oil pressure a the respective flange (3250) which clamps the braking disks (3213) opposes the respective braking spring means (3251).

4. An apparatus, according to claim 1, **characterised in that** the driven shaft (321) arranged on said axle line (Y-Y) transmits by means of a pinion (322) the motion to a satellite wheel (323) of said epicyclic reduction gear, which makes a satellite-holder (325) to rotate in reduction, which is always keyed to said fixing means being an external flange (326) for the fixing of said device to be rotated which is a driven wheel (R).

## Patentansprüche

1. Übersetzungsvorrichtung (T) mit integrierter Bremsvorrichtung (DF), besonders mit einem Untersetzungsgetriebe-Übersetzungssystem (T), die:
- an einer Seite auf eine Antriebsachse (2) eines Antriebsmotors (M) montiert ist und
- an der anderen Seite ein angetriebenes Mittel wie zum Beispiel ein Rad oder eine andere Vorrichtung zur Rotation (R) montiert ist, wobei besagte Übersetzungsvorrichtung (T) gemäß einer "Z"-ähnlichen direkten Übersetzungslinie angebracht ist, und zwar mittels:
- ein Antriebsritzel (31), das mit der Antriebsachse (2) von besagtem Motor (M) auf der Antriebsachsenlinie (X-X) verkeilt ist,
- das in ein größeres Rad (32) eingreift, das die Bewegung auf eine angetriebene Welle (321) auf einer anliegenden parallelen Achslinie (y-y) antreibt, die:
- an einer Seite über ein Planeten-Untersetzungsgetriebe (323-324-325) mit einem Befestigungsmittel (326) axial verbunden ist, damit besagte Vorrichtung sich dreht (R), und wobei
- an der anderen Seite eine unabhängige und wasserdichte koaxiale Bremsvorrichtung (DF) in einer getrennten Kammer untergebracht ist, die an die Übertragungsvorrichtung montiert ist (T), wobei die Kammer eine Öffnung und eine äußere axiale Zugangsabdeckung (131) umfasst,
**gekennzeichnet dadurch, dass** besagte Bremsvorrichtung (DF) auf besagte anliegende parallele Achslinie (y-y) montiert ist.

2. Vorrichtung nach Anspruch 1, **gekennzeichnet dadurch, dass** besagte Bremsvorrichtung (DF) durch Bremsfedern (3212) gegen ein Scheibenpaket (3213) betätigt wird, das von einem zentralen Körper gestützt wird (3211), wobei sie ohne Öldruck oder mechanische Aktivierung stets frei ist, da sie mit Federn (3212) ausgestattet ist, die einem Flansch gegenüberliegen, der das Bremspaket (3210) festklammert, das die betreffenden Bremsscheiben freigibt (3213).

3. Vorrichtung nach Anspruch 1, **gekennzeichnet dadurch, dass** besagte Bremsvorrichtung (DF) Bremsfedern (3251) umfasst, die gegen ein Scheibenpaket (3213) wirken, das durch einen zentralen Körper gestützt wird (3211), wobei sie:
- ohne Öldruck immer gebremst ist, durch die Wirkung besagter Bremsfedern (3251);
- bei Vorhandensein von Öldruck im Schaltkreis stets freigegeben ist, wobei der Öldruck am betreffenden Flansch (3250), der die Bremsscheiben (3213) festklammert, gegen die betreffenden Bremsfedern (3251) wirkt.

4. Vorrichtung nach Anspruch 1, **gekennzeichnet dadurch, dass** die angetriebene Welle (321), die auf besagter Achslinie angebracht ist (Y-Y), mittels eines Ritzels (322) die Bewegung auf ein Satellitenrad (323) von besagtem Planeten-Untersetzungsgetriebe überträgt, das eine Satellitenhalterung (325) in Untersetzung rotieren lässt, die stets mit besagtem Befestigungsmittel verkeilt ist und als äußerer Flansch (326) zur Befestigung von besagter Vorrichtung zur Rotation fungiert, die ein angetriebenes Rad (R) ist.

## Revendications

1. Appareil de transmission (T) avec dispositif de freinage intégré (DF), particulièrement du type contenant un système de transmission à réducteur de vitesse (T), lequel:
- d'un côté est monté sur un axe de commande (2) d'un moteur de commande (M) et
- de l'autre côté un moyen moteur respectif comme par exemple une roue ou un autre dispositif pour être tourné (R) est monté, dans lequel ledit appareil de transmission (T) est disposé selon une ligne de transmission directe à "Z" moyennant:
- un pignon de commande (31) clavetté à l'axe de commande (2) dudit moteur (M) sur la ligne de l'axe de commande conducteur (X-X),
- qui engage une roue plus grande (32) qui transmet le mouvement à un arbre commandé (321) sur une ligne d'axe parallèle adjacente (y-y) lequel:
- d'un côté est axialement connecté par un réducteur de vitesse épicycloïdal (323-324-325) à un moyen de fixation (326) pour faire tourner (R) ledit dispositif, et dans lequel
- de l'autre côté un dispositif de freinage coaxial étanche à l'eau et indépendant (DF) est logé dans une chambre séparée montée sur l'appareil de transmission (T), la chambre comprenant une ouverture et une couverture d'accès axiale externe (131),
**caractérisé en ce que** ledit dispositif de freinage (DF) est monté sur ladite ligne d'axe adjacente parallèle (y-y).

2. Un appareil selon la revendication 1, **caractérisé en ce que** ledit dispositif de freinage (DF) est actionné par des moyens de freinage à ressort (3212) contre une pile de disques (3213) supportée par un corps central (3211), étant toujours libre en absence de pression d'huile ou d'action mécanique, étant pourvu de moyens de ressort (3212) opposant une bride laquelle serre la pile de freinage (3210) en libérant les disques de freinage respectifs (3213).

3. Un appareil selon la revendication 1, **caractérisé en ce que** ledit dispositif de freinage (DF) comprend des moyens de freinage à ressort (3251) qui agissent contre une pile de disques (3213) supportée par un corps central (3211), qui est:
- toujours freiné en absence de pression d'huile par l'opération desdits moyens de freinage à ressort (3251);
- toujours libre en présence de pression d'huile sur le circuit, dans lequel la pression d'huile présente sur la bride respective (3250) qui serre les disques de freinage (3213) oppose les moyens de freinage à ressort respectifs (3251).

4. Un appareil selon la revendication 1, **caractérisé en ce que** l'arbre commandé (321) disposé sur ladite ligne d'axe (Y-Y) transmet moyennant un pignon (322) le mouvement à une roue satellite (323) dudit réducteur de vitesse épicycloïdal, ce qui fait tourner en réduction un support de satellite (325), qui est toujours clavetté audit moyen de fixation, lequel consiste en une bride externe (326) pour faire tourner la fixation dudit dispositif qui est une roue motrice (R).
